# EUROPEAN PATENT SPECIFICATION

(11) **EP 1 849 843 B1**
(45) Date of publication and mention of the grant of the patent: **30.09.2015**
(21) Application number: 07250819.5
(22) Date of filing: 28.02.2007
(51) Int. Cl.: C09D 183/04, C09D 183/14

(54) **Erosion resistant anti-icing coatings**
Erosionsbeständige Frostschutzbeschichtungen
Revêtements antigivre résistants à l'érosion

(30) Priority: 28.04.2006 US 413459
(43) Date of publication of application: 31.10.2007
(73) Proprietor: United Technologies Corporation, Hartford, CT 06101 (US)
(72) Inventor: Watson, Charles R., Windsor, CT 06095 (US); Dolan, Robert C., Coventry, CT 06238 (US); Putnam, John W., Glastonbury, CT 06033 (US); Bonarrigo, Bret B., Avon, CT 06001 (US); Kurz, Phyllis L., Hebron, CT 06248 (US); Weisse, Michael A., Tolland, CT 06084 (US)
(74) Representative: Leckey, David Herbert

(56) References cited:
- EP-A- 1 734 090
- EP-A1- 0 384 597
- US-A- 4 271 215
- KRISTEN MCCARTHY T ET AL: "NuSil Technology Introduces High-Strength Coatings for Aircraft, Automotive, Marine Industries"[Online] 21 May 2005 (2005-05-21), XP002442485 Nusil.com Retrieved from the Internet: URL:http://www.nusil.com/library/press/NuS il_Press_20050621.pdf> [retrieved on 2007-07-13]
- DATABASE WPI Week 197829 Derwent Publications Ltd., London, GB; AN 1978-52850A XP002442488 & SU 572 486 A (LENGD COMMUN AFFAIR) 16 September 1977 (1977-09-16)

## Description

### FIELD OF THE INVENTION

The invention relates to fan blades for a gas turbine engine, more particularly, to such blades having an erosion resistant anti-icing coating.

### BACKGROUND OF THE INVENTION

Ice build-up on aircraft and gas turbine engine structures has been a longstanding problem in the aerospace community. The physical presence of ice can adversely impact the aerodynamic performance of airfoils such as wings, fan blades, inlet guide vanes, fan exit guide vanes, etc. Additionally, the added weight of ice build-up can place unanticipated loads on components and, in extreme cases, may even exceed the capability of such components. Furthermore, the ice build-up can shed, which may cause severe damage to an aircraft or engine.

Anti-icing systems have been developed to prevent ice build-up on various aircraft components, such as those near the inlet of the engine. Many traditional systems utilize high temperature air from within the core of the engine, which is pumped to the areas where heat is needed to prevent ice build-up. Such systems have many disadvantages: they are complex, they add significant weight to the engine, they require complicated thermal management systems, they lead to decreased engine efficiency due to the lost core airflow, and they often require costly materials or limit the materials that can be used for components due to the high deicing temperatures that are utilized. As such, even a partial solution to the ice build up problem could have major economic benefits (i.e., if the anti-icing systems could be simpler, weigh less, and/or use less core airflow for heat, etc.)

Icephobic coatings coatings to which ice will not adhere well, may reduce or eliminate the need for traditional anti-icing systems. However, many existing icephobic coatings are based on a thermoplastic or thermosetting resin that may contain solid or liquid fillers. Due to the composition of these icephobic coatings the solid or liquid fillers settle upon the coated material's surface. The fluid interfaces or weak boundary layers on the surface of the materials provide ice adhesion strengths of no more than 300kPa. However, unprotected thermoset or thermoplastic materials typically have poor erosion resistance, and adding solid or liquid fillers further decreases their erosion resistance. This is undesirable because the engine and aircraft components that most need ice build-up protection are positioned in severely erosive environments.

Therefore, there exists a need for icephobic coatings that have better erosion resistance than existing icephobic coatings.

Therefore, there exists further a need for icephobic coatings that do not contain solid and/or liquid fillers.

Exemplary anti-icing coatings are disclosed in EP-A-0384597, SU 572486-A and EP-A-1734090.

### SUMMARY OF THE INVENTION

In accordance with the present invention, a coated fan blade for a gas turbine engine is provided as claimed in claim 1.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a representation of an exemplary process for protecting an article using an exemplary anti-icing coating described herein;
FIG. 2 is a representation of an exemplary fan blade in accordance with the invention and the location of the anti-icing coating applied thereupon from the inner flowpath to a minimum span location;
Fig. 3 is a graphical illustration of a comparison of ice adhesion properties of several anti-icing compositions including NuSil^{®} R-2180;
Fig. 4 is a graphical illustration of a comparison of erosion resistance properties of several anti-icing compositions including NuSil^{®} R-2180;
FIG. 5 is a graphical illustration of the ice adhesion properties of NuSil^{®} R-2180 after environmental exposure; and
FIG. 6 is a graphical illustration of the erosion resistance of NuSil^{®} R-2180 after environmental exposure.

Like reference numbers and designations in the various drawings indicate like elements.

### DETAILED DESCRIPTION

This invention relates to icephobic coatings having improved erosion resistance. As used herein and throughout, an "icephobic coating", or an "anti-icing coating", is either a coating to which ice will not adhere, or a coating where the ice adhesion strength thereto is greatly reduced relative to that of the underlying substrate. The term "additive" means any solid and/or liquid filler that may be added to the exemplary anti-icing coating composition and resultant anti-icing coating described herein.

Unlike anti-icing coatings of the prior art, which are based on thermoplastic or thermosetting resins that may contain solid or liquid fillers, the exemplary anti-icing coatings described herein are based on erosion resistant elastomeric materials free of additives. The exemplary anti-icing coating generally exhibits an ice shear strength of 19kPa to 50kPa, with an average ice shear strength of 37kPa, provides erosion resistance/protection from -54°C (-65°F) to 204°C (400°F) with excursions to 500°F (260°C) thus also possessing enhanced thermal stability.

An exemplary anti-icing coating composition may comprise at least one high molecular weight silicone based elastomeric material free of additives and, in particular, at least one polysiloxane free of additives. Polysiloxanes are elastomeric materials that may be used in environments from -100°C (-150°F) up to 204°C (400°F). Polysiloxanes are also thermally stable up to 500°F (260°C). Suitable polysiloxanes may be high molecular weight polysiloxanes such as, but not limited to, platinum cured vinyl terminated polydimethyl siloxane, peroxide cured vinyl terminated polydimethyl siloxane, polyphenylmethyl siloxane, 4-polytrifluoropropylmethyl siloxane and polydiphenyl siloxane. The anti-icing coating composition described herein is commercially available as NuSil^{®} R-2180 from NuSil Technology, LLC, Santa Barbara, California. Prior to the inventors' discovery, NuSil^{®} R-2180 was not previously known to exhibit advantageous anti-icing properties and icephobic qualities, and had not been used as an anti-icing coating composition.

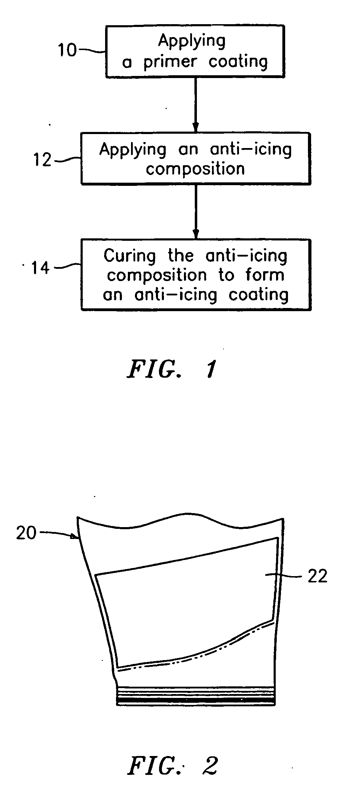

An exemplary process for protecting an article using the anti-icing coating described herein comprises applying a primer upon at least one surface of the article to form a primer coating at step 10 of FIG. 1. The primer composition comprises a titanate coupling agent and optionally a silane coupling agent. Optionally, the coupling agent may include a catalyst such as platinum, palladium, rhodium and combinations comprising at least one of the foregoing, as known to one of ordinary skill in the art. The primer coating may be applied using any one of several processes known to one of ordinary skill in the art. For example, the primer coating may be applied by spraying (e.g., solvent assisted, electrostatic), brushing, dipping and combinations comprising at least one of the foregoing processes. The resultant primer composition coating may have a thickness of 0.0025 to 0.0127 mm (0.0001 inches to 0.0005 inches).

After applying the primer coating, an anti-icing composition composed of at least one of the aforementioned polysiloxanes free of additives, e.g., NuSil^{®} R-2180, is applied to the primer coating at a step 12 of FIG. 1. Once applied, the anti-icing composition may be cured to form an anti-icing coating upon the primer coating at a step 14 of FIG. 1. The anti-icing coating may be cured using any conventional means known to one of ordinary skill in the art. For example, the anti-icing coating may be cured in an oven at a temperature of 25°C (77°F) to 149°C (300°F) for about 30 minutes to about 135 minutes to create a cross-linked silicone based elastomer. The resultant anti-icing coating may have a thickness of 0.127 mm to 0.508 mm (5 mils to 20 mils).

The resulting anti-icing coating withstands flexing and vibration consistent with its intended use, as well as repeated exposure to the high velocity elements, that is, wind, rain, and dirt impingement. In addition, the anti-icing coating resists other potentially harmful elements such as cleaning fluids, anti-icing fluid, salt spray, jet fuel and turbine engine lubricating oil. Moreover, the resultant anti-icing coating exhibits robust bond strength under centrifugal load.

Referring now to FIG. 2, an exemplary fan blade 20 in accordance with the invention for use in a turbine engine is shown. Fan blade 20 is coated with the exemplary anti-icing coating described herein. An exemplary anti-icing coating 22 may be applied, for example, from the inner flowpath to a minimum span location along the blade 20 as understood by one of ordinary skill in the art. Typically, fan blades experience the heaviest ice build-up in at least this region and benefit using the exemplary anti-icing coatings described herein.

### EXPERIMENTAL RESULTS

The experimental results below do not illustrate the claimed invention as there is no disclosure therein of a primer coating applied to the product substrates.

### Ice Adhesion Test

Six commercially available products were tested to determine their ice adhesion value. All six products met a minimum temperature requirement of 250°F (121°C) on both titanium and BMI/carbon fiber composite substrates, provide some erosion resistance and exhibit low ice adhesion. The products included the following: Microphase Phasebreak B2; Microphase ESL; 21^{st} Century 51PC951; S&A of Fernandia RIP-4004; Kiss Cote^{®} MegaGuard^{®} LiquiCote; and NuSil^{®} R-2180.

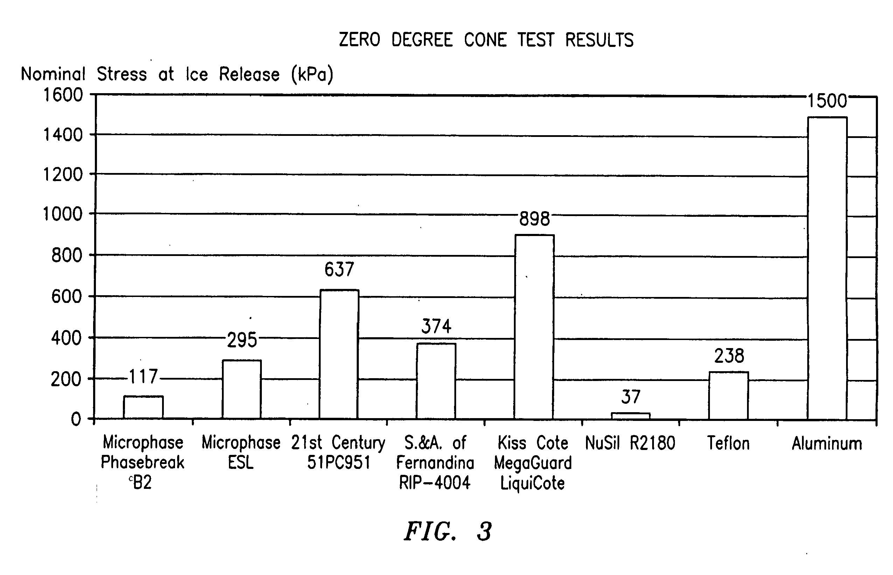

Ice adhesion was measured using a zero degree cone ("ZDC") test. The ZDC test grows ice in an annular gap between two concentric, cylindrical surfaces and then measures the force required to push the inner cylinder, or pile, out of the ice collar and outer cylinder. An O-ring, installed on the bottom of the pile, keeps the distilled, deionized, and de-aired water from leaking out while it freezes. The samples required about eight hours to freeze completely at a temperature of -about 10°C, with about an additional 40 hours for the internal stresses to relax before testing. The samples were then tested using a materials testing machine that maintained the rate of push on the inner pile. The ice adhesion test results are graphically illustrated in Figure 3. The NuSil^{®} R-2180 composition exhibited remarkably improved ice adhesion properties over Teflon^{®}, widely considered the baseline in anti-icing coatings, as well as the other well recognized anti-icing coating products.

### Sand Erosion

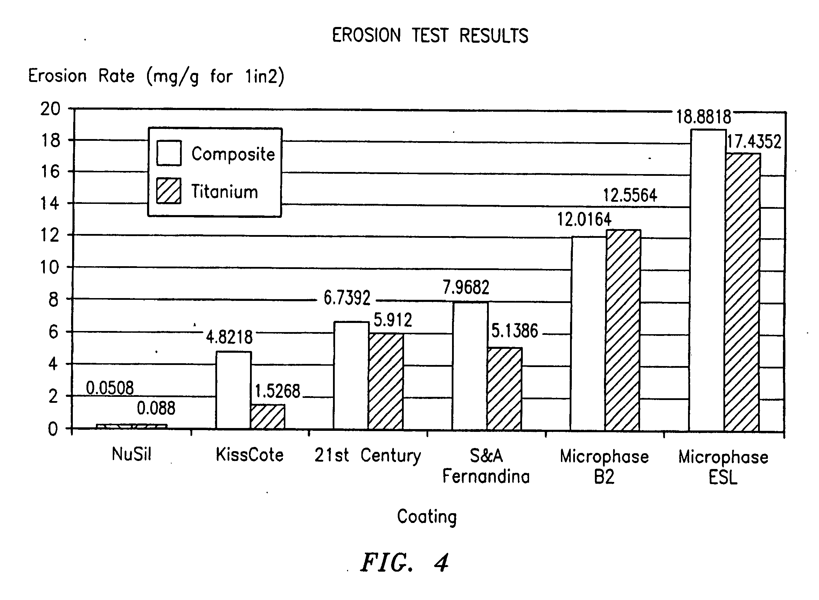

The same six commercially available products were tested to evaluate their ability to withstand sand erosion. Each product was applied as a coating upon a composite based substrate and a titanium based substrate. The test was performed at room temperature. Each coated composite substrate was sprayed with MIL E5007 crushed quartz erodent at a particle velocity of 600 feet per second (183 M/S) and a 20 degree angle of incidence. The sand erosion test results are graphically illustrated in Figure 4. The NuSil^{®} coatings on both the composite based and titanium based substrates exhibited remarkably superior ability to withstand sand erosion compared to the other commercially available icephobic coatings.

### Ice Adhesion after Environmental Exposure of NuSil^{®} R-2180

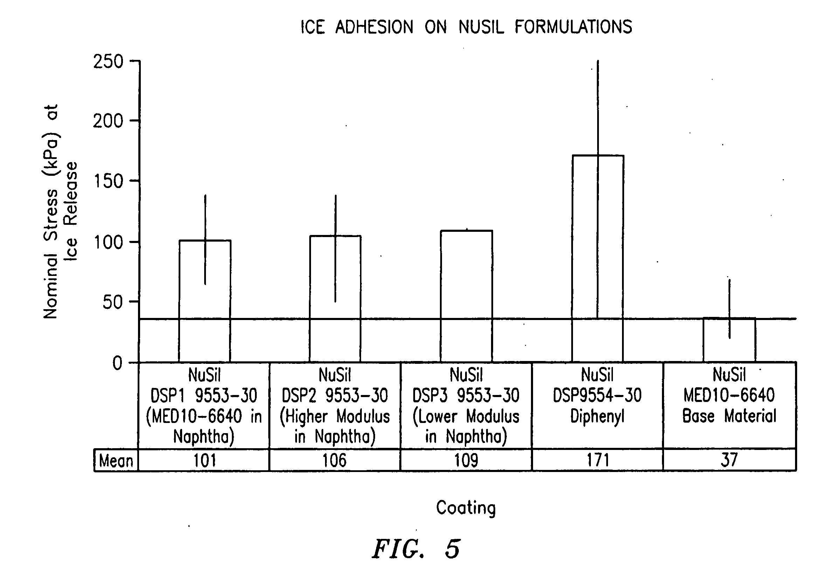

Additional ice adhesion testing was performed to further characterize NuSil^{®} R-2180 as an anti-icing coating composition. Ice adhesion testing was conducted on NuSil^{®} R-2180 coated pins after environmental exposure. The coated pins were thermally aged at 260°F (127°C) for 1000 hours, humidity cycled at 95% relative humidity for 5 days, then dried at 260°F (127°C) for 3 hours and repeated for 10 cycles, exposed to salt spray for 30 days, and roughened with sand paper to simulate wear. The results are graphically illustrated in FIG. 5. As indicated, the ice adhesion values increased slightly after environmental exposure, e.g., 171kPa compared to 37kPa, but the ice adhesion values were still lower than the Teflon baseline ice adhesion value of 238kPa.

### Environmental Exposure and Erosion Testing of NuSil^{®} R-2180

Additional erosion testing was conducted to characterize NuSil^{®} R-2180 as an anti-icing coating composition. NuSil^{®} R-2180 was applied as a coating to titanium based and BMI carbon based composite substrates. The R-2180 coated substrates were exposed to fluid contaminants prior to sand erosion and ice adhesion testing. Two types of exposures were performed. A 7-day soak test was conducted. The coated panels were submerged in each of the following contaminants: jet fuel (JP-8), turbine engine lubricating oil, anti-icing fluid (propylene glycol) and salt water. The coated panels were also subjected to a dip test. Each panel was soaked in each of the contaminants for 30 minutes, then removed and dried for one hour at 121°C (250°F) for five cycles. Each contaminant soaked coated panel was sprayed with MIL E5007 crushed quartz erodent at a particle velocity of 182.9 m/s (600 feet per second) and a 20 degree angle of incidence.

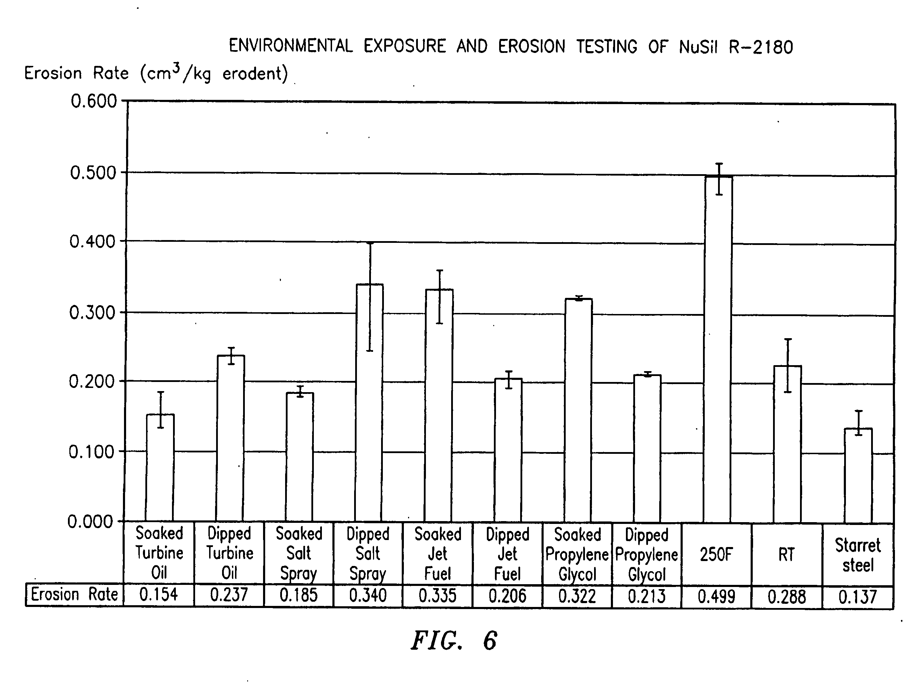

The sand erosion test results are graphically illustrated in FIG. 6. The contaminant soaked coated panels were compared with uncontaminated, uncoated BMI carbon composite panels having an erosion rate of 3.93 cm³/kg, and uncontaminated, uncoated titanium panels having an erosion rate of 0.347 cm³/kg. With the exception of results with respect to exposure to a temperature of 121°C (250°F), the contaminated soaked coated panels exhibited erosion rates that were slightly better to significantly improved compared to the erosion rates of both uncontaminated, unsoaked BMI carbon composite and titanium panels, respectively. The anti-icing coating described herein is typically subjected to temperatures of 60°C (150°F) to 93°C (200°F) in a standard operating environment. The observed erosion rate of 0.499 cm³/kg at 121°C (250°F) is a result of pushing the limits of the anti-icing coating's properties.

Anti-icing coatings of the prior art that contain polyurethane based elastomers possess poor high temperature thermal stability which limits them to use in environments from -54°C (-65°F) up to 121°C (250°F). In addition, anti-icing coatings of the prior art that contain fluorocarbon based elastomers do not perform well at low temperatures due to their low glass transition temperatures. The exemplary anti-icing coatings described herein exhibit both high temperature thermal stability and perform well at low temperatures. Furthermore, the exemplary anti-icing coatings described herein do not require any additives to impart these desirable anti-icing coating properties. As mentioned, both solid and/or fluid additives may enhance the prior art coatings bond strength to an article; however, the additives impair the erosion resistance and useful service life of the prior art anti-icing coating. The exemplary anti-icing coatings described herein will thus exhibit a longer useful service life as well as possess the desired anti-icing coating properties.

## Claims

1. A coated fan blade (20) for a gas turbine engine, comprising:
a blade having an inner span area; and
an anti-icing coating (22) having a thickness of 0.127 mm to 0.508 mm (5 mils to 20 mils) and exhibiting an ice shear strength of 19kPa to 50 kPa disposed upon at least said inner span area,
wherein said anti-icing coating (22) includes an anti-icing composition comprising at least one polysiloxane free of additives, wherein the term additive means any solid and/or liquid filler material that may be added to the anti-icing coating composition and resultant anti-icing coating; and
a primer coating disposed on said inner span area beneath said anti-icing coating, said primer coating comprising a titanate coupling agent and optionally a silane coupling agent.

2. The coated blade of claim 1, wherein said at least one polysiloxane free of additives comprises a polyalkyl siloxane selected from the group consisting of platinum cured vinyl terminated polydimethyl siloxane, peroxide cured vinyl terminated polydimethyl siloxane, polyphenylmethyl siloxane, polydiphenyl siloxanes, and 4-polytrifluoropropylmethyl siloxane.

3. The coated blade of claims 1 to 2, wherein said anti-icing coating provides erosion protection from -54°C (-65°F) to 204°C (400°F).

## Patentansprüche

1. Beschichteter Ventilatorflügel (20) für einen Gasturbinenmotor, umfassend:
einen Flügel mit einer inneren Spannweite; und
eine Frostschutzbeschichtung (22) mit einer Dicke von 0,127 mm bis 0,508 mm (5 Thou bis 20 Thou) und einer Frostscherfestigkeit von 19 kPa bis 50 kPa, die mindestens auf die innere Spannweite aufgetragen wird,
wobei die Frostschutzbeschichtung (22) eine Frostschutzzusammensetzung enthält, die mindestens ein Polysiloxan ohne Zusatzstoffe umfasst, wobei mit der Bezeichnung Zusatzstoff alle festen und/oder flüssigen Füllstoffe gemeint sind, die der Frostschutzzusammensetzung und der daraus entstehenden Frostschutzbeschichtung hinzugefügt werden können; und
eine Grundbeschichtung, die auf die innere Spannweite unter der Frostschutzbeschichtung aufgetragen wird, und die Grundbeschichtung einen Titanathaftvermittler und optional einen Silanhaftvermittler enthält.

2. Beschichteter Flügel nach Anspruch 1, wobei das mindestens eine Polysiloxan, das frei von Zusatzstoffen ist, ein Polyalkylsiloxan ausgewählt aus der Gruppe bestehend aus platinvernetztem, vinylterminiertem Polydimethylsiloxan, peroxidvernetztem, vinylterminiertem Polydimethylsiloxan, Polyphenylmethylsiloxan, Polydiphenylsiloxanen und 4-Polytrifluorpropylmethylsiloxan enthält.

3. Beschichteter Flügel nach Ansprüchen 1 bis 2, wobei die Frostschutzbeschichtung einen Erosionsschutz von -54 °C (-65 °F) bis 204 °C (400 °F) bietet.

## Revendications

1. Pale de ventilateur revêtue (20) pour un moteur à turbine à gaz, comprenant :
une pale avec une surface de portée intérieure ; et
un revêtement antigivrage (22) présentant une épaisseur de 0,127 mm à 0,508 mm (de 5 ml à 20 ml) et montrant une résistance au cisaillement de la glace de 19 kPa à 50 kPa agencé sur au moins ladite surface de portée intérieure,
dans laquelle ledit revêtement antigivrage (22) comprend une composition antigivrage comprenant au moins un polysiloxane exempt d'additifs, dans lequel le terme additif signifie tout matériau de remplissage solide et/ou liquide qui peut être ajouté à la composition de revêtement antigivrage et au revêtement antigivrage résultant ; et
un revêtement d'apprêt agencé sur ladite surface de portée intérieure sous ledit revêtement antigivrage, ledit revêtement d'apprêt comprenant un agent de couplage en titanate et en option un agent de couplage de silane.

2. Pale revêtue selon la revendication 1, dans laquelle ledit au moins un polysiloxane exempt d'additifs comprend un polyalkylsiloxane sélectionné dans le groupe composé du polydiméthylsiloxane durci au platine à groupes terminaux vinyles, polydiméthylsiloxane durci au peroxyde à groupes terminaux vinyles, polyphénylméthylsiloxane, des polydiphénylsiloxanes et 4-polytrifluoropropylméthylsiloxane.

3. Pale revêtue selon les revendications 1 à 2, dans laquelle ledit revêtement antigivrage fournit une protection contre l'érosion de -54°C (-65°F) à 204°C (400°F).
